# EUROPEAN PATENT APPLICATION

(11) **EP 4 272 554 A1**
(43) Date of publication of application: **08.11.2023**
(21) Application number: 22172141.8
(22) Date of filing: 06.05.2022
(51) Int. Cl.: A01N 25/02, A01N 25/34, A01N 43/36, A01P 1/00

(54) **BIOCIDES AND ADHESIVE BINDING THEREOF**

(71) Applicant: Eberhard Karls Universität Tübingen, 72076 Tübingen (DE)
(72) Inventor: JUST, Lothar, 72076 Tübingen (DE); GLEISER, Corinna, 72108 Rottenburg a. N. (DE); PIETRZIK, Nikolas, 72076 Tübingen (DE); KALBACHER, Hubert, 72070 Tübingen (DE); FEIL, Gerhard, 72076 Tübingen (DE); HIRT, Bernhard, 72070 Tübingen (DE)
(74) Representative: König Szynka Tilmann von Renesse Patentanwälte Partnerschaft mbB Düsseldorf

(57) **Abstract**

The invention provides an aqueous solution comprising 5-*N*-carboxamido-2-pyrrolidone-*N*'-n-dodecyl propane-1,3-diamine, also referred to as Py-C12, and/or 5-*N*-carboxamido-2-pyrrolidone-*N*'-n-tetradecyl propane-1,3-diamine, also referred to as Py-C14, wherein the solution has a pH of 8 or less and does not comprise a solubilizer. These solutions are particularly useful as biocides. In a related aspect, the invention provides a method for attaching Py-C12 and/or Py-C14 to a material.

## Description

The invention provides an aqueous solution comprising 5-*N*-carboxamido-2-pyrrolidone-*N*'-n-dodecyl propane-1,3-diamine, also referred to as Py-C12, and/or 5-*N*-carboxamido-2-pyrrolidone-*N*'-n-tetradecyl propane-1,3-diamine, also referred to as Py-C14, wherein the solution has a pH of 8 or less and/or a temperature of 44 °C or more, and wherein the solution does not comprise a solubilizer. These solutions are particularly useful as biocides. In a related aspect, the invention provides a method for attaching Py-C12 and/or Py-C14 to a material.

### Background of the Invention

Derivatives of propylenediamine have long been used for disinfecting purposes. Commercially available diamines with biocidal activity include "C12", i.e. *N*-dodecyl-1,3-diamino propane (C₁₅H₃₄N₂; molecular weight 242.45; CAS 5538-95-4) and "Bis-C12", i.e. *N*'-(3-aminopropyl)-*N*'-dodecyl-1,3-diamino propane (C₁₈H₄₁N₃; molecular weight 299.54; CAS 2372-82-9).

Further, biocides of the *N*,*N*'-alkyl-1-ω-diamine type are important active components in formulations and dressings for microbial control.

A prominent biocide is alkaline Glucoprotamin. Glucoprotamin (CAS 164907-72-6) is by definition "reaction products of: glutamic acid and N-(C12-14-alkyl)propylenediamine". The latter is a mixture of a variety of *N*-alkylpropylene-1,3-diamines and *N*-alkylamines which mainly differ in chain lengths of the N-alkyl residues. Conversion with L-glutamic acid is achieved by a thermal condensation process which yields Glucoprotamin as a complex mixture of diverse condensation products as well as unreacted components of the cocopropylene-1,3-diamine starting materials. Glucoprotamin also contains Py-C12, and Py-C14. The good aqueous solubility of Glucoprotamin, containing Py-C12 and Py-C14, is due to the other components in Glucoprotamin, which act as solubilizers.

In general, the presence of additional substances, such as solubilizers, in biocidal products limits their practical application since the additional substances are often potentially hazardous and cost intensive.

It is thus an object of the present invention to provide solutions comprising Py-C12 and/or Py-C14 that are free, in particular, of solubilizers.

Moreover, biocidal agents are often associated with a negative environmental toxicological potential. Therefore, their immobilization is of great interest yet technologically challenging.

Available techniques can be distinguished by the way immobilization is achieved, namely by covalent binding (coupling) on the one hand and adhesive interaction depending on effects like e.g. ion binding or van der Waals forces on the other hand.

For 5-oxo-pyrrolidine-2-carboxylic acid derivatives such as Py-C12 and Py-C14, the possibility of immobilization by coupling, i.e., covalent binding, via its heterocyclic oxo-pyrrolidine has been proposed (see WO 2016/016168 A1 and WO 2016/016167 A1).

Adhesive immobilization techniques, i.e. based on non-covalent interactions, might provide an alternative, yet these frequently suffer from inadvertent and uncontrollable leaching.

In particular, depending on their pattern of substitution, *N*,*N*'-alkyl-1-ω-diamines show different physical characteristics concerning their solubility in aqueous and non-aqueous media and adhesive behavior towards surfaces.

In addition, depending on the specifically intended use of the diamines, their physical and chemical features can be of tremendous importance. In particular, solubility is an issue often observed and for many applications, liquid phases (states of matter) are crucial. On the one hand, liquid phase and fluidic parameters are important for technical process management. On the other hand, good solubility can cause problems regarding leaching or undesired rinse-off.

This can lead to severe problems, e.g. since many of the *N*,*N*'-alkyl-1-ω-diamines are toxic or ecotoxic chemicals and their release into soil or water should thus be avoided or at least minimized. Hence, rinsing off such species when getting into contact with water is an issue e.g. in outdoor applications and causes expenses and efforts concerning e.g. facility infrastructures and wastewater management.

Therefore, possibilities to combine the desired features like biocidal activity with physical parameters, like adhesive binding to various materials, which finally allow the use in specific applications are needed.

It is thus another object of the present invention to provide methods by which Py-C12 and/or Py-C14 can readily and persistently be attached to materials. The thus obtained materials could be employed in numerous applications and provide beneficial properties.

### Short Description of the Invention

It has now surprisingly been found that changes in pH, temperature and/or salt concentration allow to reversibly modulate the state of matter of Py-C12 and Py-C14 in an aqueous milieu.

Based on this finding, it is now possible to provide aqueous solutions comprising Py-C12 and/or Py-C14 that are free of solubilizers. Such solutions can advantageously be used as biocides.

Further, the ability to readily modulate the state of matter can be used for technical penetration and immobilization.

The invention thus provides:
(1) An aqueous solution comprising a diamine selected from 5-*N*-carboxamido-2-pyrrolidone-*N*'-n-dodecyl propane-1,3-diamine (Py-C12) and/or 5-*N-*carboxamido-2-pyrrolidone-*N*'-n-tetradecyl propane-1,3-diamine (Py-C14), wherein the solution has
   (i) a pH of 8 or less and/or
   (ii) a temperature of 44 °C or more, and
   wherein the solution does not comprise a solubilizer;
(2) a method for attaching a diamine selected from 5-*N*-carboxamido-2-pyrrolidone-*N'*-n-dodecyl propane-1,3-diamine (Py-C12) and/or 5-*N*-carboxamido-2-pyrrolidone-*N*'-n-tetradecyl propane-1,3-diamine (Py-C14) to a material, the method comprising: contacting the material with a liquid solution of said diamine.

Alternative and preferred embodiments are described in the dependent claims.

### Short Description of the Figures

- Figure 1:: Textiles treated with Py-C12 exhibit high wash resistance in aqueous systems and retain their biocidal activity.
- Figure 2:: Modulation of the state of matter of Py-C12 due to pH shift using HCl and NaOH.
- Figure 3:: Modulation of the state of the matter of Py-C12 due to pH shift using CO₂.
- Figure 4:: Modulation of the state of the matter of Py-C12 due to salt concentration.
- Figure 5:: Modulation of the state of the matter of Py-C12 due to temperature shift.
- Figure 6:: Penetration and subsequent immobilization of Py-C12 in a synthetic sponge.
- Figure 7:: Penetration and subsequent immobilization of Py-C12 in a perforated textile.
- Figure 8:: Penetration and subsequent immobilization of Py-C12 in wood.
- Figure 9:: Penetration and subsequent immobilization of Py-C12 in leather.
- Figure 10:: Penetration and subsequent immobilization of Py-C12 in bone tissue.
- Figure 11:: Polyester fabric treated with Py-C12 exhibit high wash resistance in aqueous systems and retain their biocidal activity.
- Figure 12:: Silk fabric treated with Py-C12 exhibit high wash resistance in aqueous systems and retain their biocidal activity.
- Figure 13:: Cotton fabric treated with Py-C12 exhibit high wash resistance in aqueous systems and retain their biocidal activity.
- Figure 14:: Wood samples treated with Py-C12 exhibit high wash resistance in aqueous systems and retain their biocidal activity.

### Detailed Description of the Invention

The invention provides an aqueous solution as described in (1) above, use of the solution as biocide, and a related method as described in (2) above.

The invention is based on the finding that changes in pH, temperature and/or salt concentration allow to reversibly modulate the state of matter of Py-C12 and Py-C14 in an aqueous milieu.

The aqueous solution comprises Py-C12 having the following formula (I) 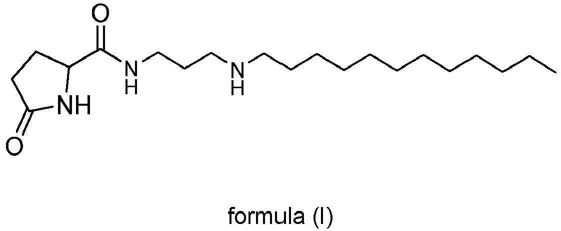 and/or Py-C14 having the following formula (II)

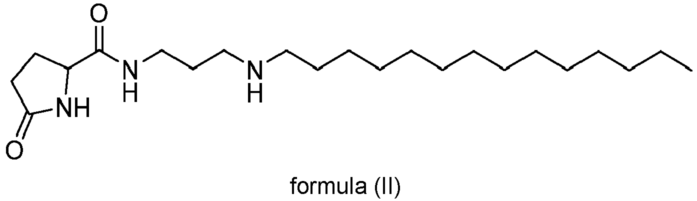

Formula (I) and (II) encompass all stereoisomers and mixtures thereof.

Preferably, Py-C12 is (S)-5-*N*-carboxamido-2-pyrrolidone-*N'*-n-dodecyl propane-1,3-diamine according to formula (Ia).

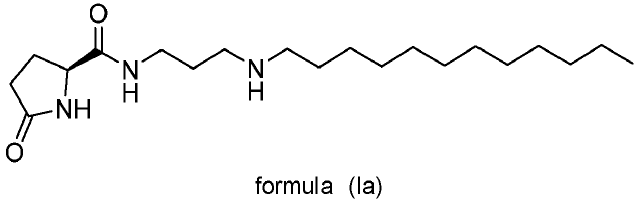

Preferably, Py-C14 is (S)-5-*N*-carboxamido-2-pyrrolidone-*N*'-n-tetradecyl propane-1,3-diamine (IIa).

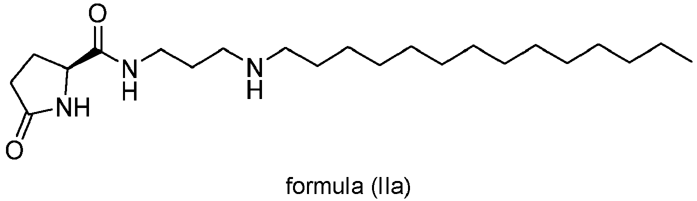

In one embodiment, the aqueous solution according to the invention has a pH of 8 or less.

With the inventive solution having a pH of 8 or less, the Py-C12 and/or Py-C14 stays in solution/in a liquid state of matter irrespective of the temperature of the solution.

Notably, at a pH of 8 or less Py-C12 and Py-C14 are in liquid form already at a temperature of as low as about 16 °C, enabling their use e.g. as biocide.

In a related embodiment, the aqueous solution according to the invention has a temperature of 44 °C or more.

With the inventive solution having a temperature of 44 °C or more, the Py-C12 and/or Py-C14 stays in solution/in a liquid state of matter even at high concentrations such as 40 % (w/v) in water, enabling their use as biocide.

At lower concentrations, namely in a range of from about 1 % to about 10 %, Py-C12 and/or Py-C14 stays in solution/in a liquid state of matter already at a temperature of 40 °C, which further extends their practical application e.g. as biocide.

The term "biocide" or "biocidal agent" as used herein refers to a chemical substance intended to destroy, deter, render harmless or exert a controlling effect on any harmful organism. Biocides are commonly used in medicine, agriculture, forestry and industry. Biocides may include preservatives, insecticides, disinfectants and pesticides.

The aqueous solution according to the invention does not comprise a solubilizer.

In keeping with this, the solution is different from the alkaline Glucoprotamin. According to Karlheinz Disch (Disch K. "Glucoprotamine - a new antimicrobial substance". Zentralbl Hyg Umweltmed. 1994 Jun;195(5-6):357-65. PMID: 7916863), Glucoprotamin is by definition a conversion product of L-glutamic acid and cocopropylene-1,3-diamine. The latter is a mixture of a variety of *N*-alkylpropylene-1,3-diamines and *N*-alkylamines which mainly differ in chain lengths of the N-alkyl residues. Conversion with L-glutamic acid is achieved by a thermal condensation process which yields Glucoprotamin as a complex mixture of diverse condensation products as well as unreacted components of the cocopropylene-1,3-diamine starting materials. In sum, these mixtures are described as easily soluble in water. Good solubility in water is due to a variety of reasons. First, a main part of the Glucoprotamin mixture consists of unreacted alkyl amines and diamines, which can generally be dissolved in water. The same is valid for glutamic acid condensation products that still have a carboxyl group and thus show good water solubility due to their zwitterionic character. Secondly, the smaller part of condensation products that would show poor solubility in water as mono constituent substances is simply dissolved by the other water soluble species which act as "soap-like" solubilizers. Overall this leads to a good water solubility of Glucoprotamin, which is, however, unfavorable for the purpose of aggregate state management as is described in this invention.

The term "solubilizer" as used herein generally refers to additives and auxiliaries that merely favor solubility of the active agent, namely Py-C12 and/or Py-C14, but do not provide for the biocidal activity.

Solubilizers include any organic solvents; open-chain esters, such as ethyl acetate; open-chain amides, such as dimethylformamide; lactones, such as γ-butyrolactone; lactams, such as N-Methyl-2-pyrrolidone (NMP); nitriles, such as acetonitrile, open-chain ketones, such as acetone, methyl ethyl ketone; cyclic ketones, such as cyclohexanone; aldehydes, such as propanal, benzaldehyde; alcohols (including polyalcohols and branched-chain alcohols), such as methanol, ethanol, glycerine, 2-propanol; derivatives of alcohols, such as 2-(2-butylethoxy)ethanol, 2-phenoxyethanol; amines, such as triethylamine; open-chain ethers and polyethers, such as diethyl ether, polyethylene glycol; cyclic ethers and polyethers, such as dioxane, tetrahydrofuran; aromatics, such as toluene, xylene, nitrobenzene; alicycles, such as cyclohexane; heterocyclic compounds, such as pyridine, furan, pyrrole, pyrrolidine, piperidine; open-chain alkanes and alkenes, such as paraffines, petroleum ether, heptane; halogenated hydrocarbons, such as dichloromethane, chloroform, tetrachloroethylene, chlorobenzene; other derivatized hydrocarbons, such as nitromethane, carbon disulphide, dimethyl sulphoxide, urea derivatives (e.g. tetramethylurea), sulfolane, aniline; emulsifiers, such as sodium benzoate, crown ether, sodium dodecyl sulfate, polysorbates (TWEEN); dispersants, such as surfactants and bile acid; surfectants, such as ethers with polyethylene glycol mono-Bu ether.

In keeping with the above and the essence of the invention described herein, the term "solubilizer" as used herein of course does not comprise neither Py-C12 nor Py-C14.

In a particular embodiment, the solution comprises Py-C12, preferably the solution comprises Py-C12 in a concentration from about 0.001 % (w/v) to about 40 % (w/v), more preferably the solution comprises Py-C12 in a concentration from about 0.01 % (w/v) to about 10 % (w/v), most preferably the solution comprises Py-C12 in a concentration from about 0.1 % (w/v) to about 5 % (w/v).

In a particular embodiment, the solution consists essentially of Py-C12 and water, preferably the solution comprises Py-C12 in a concentration from about 0.001 % (w/v) to about 40 % (w/v), more preferably the solution comprises Py-C12 in a concentration from about 0.01 % (w/v) to about 10 % (w/v), most preferably the solution comprises Py-C12 in a concentration from about 0.1 % (w/v) to about 5 % (w/v).

In an alternative embodiment, the solution consists essentially of Py-C14 and water, preferably the solution comprises Py-C14 in a concentration from about 0.001 % (w/v) to about 40 % (w/v), more preferably the solution comprises Py-C14 in a concentration from about 0.01 % (w/v) to about 10 % (w/v), most preferably the solution comprises Py-C14 in a concentration from about 0.1 % (w/v) to about 5 % (w/v).

In a related embodiment, the solution consists essentially of Py-C12, Py-C14 and water.

The term "consists essentially of" or "consisting essentially of" as used herein means that the solution may have certain additional features beyond those described.

Namely, the inventive solution may, in addition to the diamine(s) and water also contain a pH-modifying agent for the necessary adjustment of the pH.

As used herein "pH-modifying agent" refers to an agent capable of modulating the pH to a desired range.

The pH modifying agent may be a proton-donating agent.

By "proton-donating agent" as used herein it is meant any acidifying agent such as e.g. acid compounds or mixtures thereof, which are suitable for lowering the pH. Proton-donating agents can be organic acids, including polymeric acids, mineral acids or mixtures thereof.

It is particularly preferred that the proton-donating agent is selected from hydrochloric acid (HCl), sulfuric acid (H₂SO₄) and carbonic acid (H₂CO₃), most preferably the proton-donating agent is HCl.

Therefore, in particular embodiments the inventive solution consists of Py-C12, water and a proton-donating agent.

In an alternative embodiment, the inventive solution consists of Py-C14, water and a proton-donating agent.

In a related embodiment, the inventive solution consists of Py-C12, Py-C14, water and a proton-donating agent.

In keeping with the foregoing, the inventive solution is thus preferably obtainable by mixing a diamine selected from Py-C12 and/or Py-C14 with water and a pH-modifying agent, preferably a proton-donating agent, for adjusting the pH to a value of 8 or less. Hence, in a preferred embodiment, the inventive solution is obtained by combining or mixing a diamine selected from Py-C12 and/or Py-C14 with water and a pH-modifying agent, preferably a proton-donating agent, most preferably HCl.

In a related aspect, the invention provides a method for attaching a diamine selected from Py-C12 and/or Py-C14 to a material, as described in (2) above.

Of note, the attached diamine retains its biocidal activity; and/or its activity to denature proteins; and/or its activity to interact with membrane lipids, i.e. acts as a detergent.

The term "attach" or "attachment" as used herein refers to a non-covalent interaction. Namely, the attachment to the material is based on non-covalent interactions, which does, however, not exclude the additional presence of covalent interactions. Most preferred, the attachment is a non-covalent attachment also referred to as adhesive immobilization. The attachment to the material preferably involves one or more of hydrogen bonding, Van der Waals forces and/or ionic interactions.

Materials to which Py-C12 and/or Py-C14 may be attached, i.e. adhesively immobilized, include internal and external surfaces of materials. Such materials include absorbent, adsorbent, hygroscopic and porous materials such as fabrics (textiles) e.g. cotton, wool, hemp, silk, polyester, polyamide; building materials e.g. straw, glass wool, rock wool, silicone, gypsum, lime, cement, concrete, bricks, porous and absorbent stones, clay; glues and gels, biological and synthetic sponges for cleaning and medical applications, porous and sintered metals, porous and absorbent ceramics, biological tissues, natural and processed biomaterials, e.g. extracellular matrix molecules, scaffolds, bone, wood, leather, paper, cardboard, resins, plastics and composite materials.

Materials in accordance with the present invention notably include materials comprising or consisting of different polymers such as e.g. polyamides, polyurethane, polypeptides, polyols or polyesters.

The polyols include polysaccharides, in particular cellulose and chitosan.

In a particular embodiment, the material is selected from a synthetic sponge, a fabric, leather, bone tissue or wood. In a particularly preferred embodiment, the material is a fabric and the fabric comprises cellulose, silk or a polyester, more preferably the fabric is cotton, i.e. the fabric comprises cellulose and may additionally comprise waxes, fats, pectins and/or water.

For attachment to occur, the material is to be contacted with a liquid solution of Py-C12 and/or Py-C14, preferably a solution according to the above aspect (1).

Particular and preferred embodiments of a liquid solution of Py-C12 and Py-C14 are described above in relation to aspect (1) and these are likewise applicable to the method according to aspect (2).

The contacting of the inventive method might also be referred to as "incubating". Typically, the contacting lasts for at least about 10 seconds, and preferably for about 20 hours.

A suitable period of time can readily be determined by the skilled person and only requires that it allows the diamine to penetrate the material.

Such penetration is dependent on the diamine being in a liquid phase (state of matter), i.e. the diamine being dissolved.

In an aqueous milieu, solubility can be achieved by adjustment of pH, temperature and/or salt concentration.

Once the liquid diamine has penetrated the material, it may be advantageous to convert said diamine into a solid phase (state of matter) and thereby improve attachment, i.e., adhesive immobilization of said diamine to the material.

This solidifying can be achieved by adjustment of pH, temperature and/or salt concentration. For Py-C12 and/or Py-C14 for example cooling, i.e. lowering the temperature, increasing the pH and/or increasing the salt concentration may convert the liquid phase (state of matter) to the solid phase (state of matter).

The inventive method may further comprise after the solidifying: liquefying said diamine, wherein the liquefying preferably comprises one or more of the following: heating the material; decreasing the pH of the material; decreasing the salt concentration of the material, and adding a solvent.

A solvent suitable for liquefying the diamine may include organic solvents of any type of category, such as toluene, 1-propanol, 2-propanol, ethanol, 1-butanol, methanol, chloroform, tetrahydrofuran, dimethyl sulfoxide, dimethylformamide and cyclohexane.

In a preferred embodiment, the inventive method for attaching Py-C12 to a material comprises contacting the material with a liquid solution comprising Py-C12 in a concentration of at least about 0.05 % (w/v), preferably a liquid solution comprising Py-C12 in a concentration from about 0.1 % (w/v) to about 5 % (w/v), the method optionally further comprising, after the contacting, solidifying of the Py-C12.

In related preferred embodiment, the inventive method for attaching Py-C14 to a material comprises contacting the material with a liquid solution comprising Py-C14 in a concentration of at least about 0.05 % (w/v), preferably a liquid solution comprising Py-C14 in a concentration from about 0.1 % (w/v) to about 5 % (w/v), the method optionally further comprising, after the contacting, solidifying of the Py-C14.

In line with the foregoing, the invention notably includes the following specific embodiments:
An aqueous solution consisting of 5 % Py-C12 or less, preferably 1 % Py-C12 or less, more preferably 0.01 % or less, water, and a proton-donating agent, preferably HCl, wherein the solution has a pH of 8 or less, preferably of 7.8 or less.

A method for attaching Py-C12 to a synthetic sponge, the method comprising contacting the sponge with an aqueous solution of Py-C12, and optionally solidifying the Py-C12 by subsequent cooling of the sponge.

A method for attaching Py-C12 to a perforated textile, the method comprising contacting the textile with an aqueous solution of Py-C12, and optionally solidifying the Py-C12 by subsequent cooling of the textile.

A method for attaching Py-C12 to a dry pine wood sample, the method comprising contacting the wood sample with an aqueous solution of Py-C12, and optionally solidifying the Py-C12 by subsequent cooling of the wood sample.

A method for attaching Py-C12 to leather, the method comprising contacting the leather with an aqueous solution of Py-C12, and optionally solidifying the Py-C12 by subsequent cooling of the leather.

A method for attaching Py-C12 to bone tissue, the method comprising contacting the bone tissue with an aqueous solution of Py-C12, and optionally solidifying the Py-C12 by subsequent cooling of the bone tissue.

A method for attaching Py-C12 to a polyester fabric, the method comprising contacting the fabric with an aqueous solution of Py-C12, and optionally solidifying the Py-C12 by subsequent cooling of the fabric.

A method for attaching Py-C12 to a silk fabric, the method comprising contacting the fabric with an aqueous solution of Py-C12, and optionally solidifying the Py-C12 by subsequent cooling of the fabric.

A method for attaching Py-C12 to a cotton fabric, the method comprising contacting the fabric with an aqueous solution of Py-C12, and optionally solidifying the Py-C12 by subsequent cooling of the fabric.

The invention will be further described in the following examples, which are not to be construed as limiting the invention.

### Examples

### Example 1 Influence of pH on state of matter of Py-C12 at 20 °C

1 % (w/v) 5-*N*-carboxamido-2-pyrrolidone-*N*'-n-dodecyl propane-1,3-diamine (Py-C12) free base was adjusted with HCl or NaOH to pH values between 3.0 and 10.0. At pH values </= 7.8 Py-C12 was completely soluble in water at room temperature. In contrast, at pH values >/= 8 Py-C12 is present as a solid substance (see table 1).

**Table_1: Influence of pH on the state of matter of Py-C12 (1 % w/v) at 20 °C**

| **Py-C12 (1 % w/v) at 20 °C** | | | | | | | | |
|---|---|---|---|---|---|---|---|---|
| pH 3.0 | pH 4.0 | pH 5.0 | pH 6.0 | pH 7.0 | pH 7.8 | pH 8.0 | pH 9.0 | pH 10.0 |
| × | × | × | × | × | × | ∘ | ∘ | ∘ |

| | | | | | | | | |
|---|---|---|---|---|---|---|---|---|
| ×: liquid ∘: solid | | | | | | | | |

### Example 2 Influence of temperature on the state of matter of Py-C12 (1 % w/v) at pH 7.0 and pH 9.0

1 % (w/v) 5-*N*-carboxamido-2-pyrrolidone-*N*'-n-dodecyl propane-1,3-diamine (Py-C12) free base was adjusted with HCl or NaOH to pH values 7.0 and 9.0 and subsequently incubated at temperatures between 2 °C and 60 °C. At pH 7 Py-C12 was completely soluble in water within the used temperature range. In contrast, at pH 9.0 Py-C12 is only present in liquid state at the tested temperatures of 50 °C and 60 °C (see table 2).

**Table_2: Influence of temperature on the state of matter of Py-C12 (1 % w/v) at pH 7.0 and pH 9.0**

| **Py-C12 (1 % w/v)** | | | | | | | | | | |
|---|---|---|---|---|---|---|---|---|---|---|
| Temp. | 2 °C | 4 °C | 8 °C | 12 °C | 16 °C | 20 °C | 30 °C | 38 °C | 50 °C | 60 °C |
| pH 7.0 | × | × | × | × | × | × | × | × | × | × |
| pH 9.0 | ∘ | ∘ | ∘ | ∘ | ∘ | ∘ | ∘ | ∘ | × | × |

| | | | | | | | | | | |
|---|---|---|---|---|---|---|---|---|---|---|
| ×: liquid ∘: solid | | | | | | | | | | |

### Example 3 Interactions between salt concentration, temperature, and pH on the state of matter of Py-C12

5 % (w/v) 5-*N*-carboxamido-2-pyrrolidone-*N*'-n-dodecyl propane-1,3-diamine (Py-C12) free base was adjusted with HCl or NaOH to pH values 4.0, 5.0, and 10.0. The samples were combined with NaCl solutions using concentrations between 0 and 3 M in water and subsequently incubated at temperatures between 24 °C and 45 °C. The data demonstrate the complex interactions of the different parameters on the state of the matter of Py-C12 (see table 3).

**Table_3: Interactions between salt concentration, temperature, and pH on the state of matter of Py-C12 (5 % w/v)**

| pH | Temp. | Py-C12 | Py-C12 0.5M NaCl | Py-C12 1.0M NaCl | Py-C12 1.5M NaCl | Py-C12 2.0M NaCl | Py-C12 2.5M NaCl | Py-C12 3.0M NaCl |
|---|---|---|---|---|---|---|---|---|
| 4.0 | 24 °C | × | × | × | × | ∘ | ∘ | ∘ |
| 7.0 | 24 °C | × | × | × | × | ∘ | ∘ | ∘ |
| 9.0 | 24 °C | ∘ | ∘ | ∘ | ∘ | ∘ | ∘ | ∘ |
| 4.0 | 28 °C | × | × | × | × | × | ∘ | ∘ |
| 7.0 | 28 °C | × | × | × | × | × | ∘ | ∘ |
| 9.0 | 28 °C | ∘ | ∘ | ∘ | ∘ | ∘ | ∘ | ∘ |
| 4.0 | 32 °C | × | × | × | × | × | ∘ | ∘ |
| 7.0 | 32 °C | × | × | × | × | × | × | ∘ |
| 9.0 | 32 °C | ∘ | ∘ | ∘ | ∘ | ∘ | ∘ | ∘ |
| 4.0 | 36 °C | × | × | × | × | × | × | × |
| 7.0 | 36 °C | × | × | × | × | × | × | × |
| 9.0 | 36 °C | ∘ | ∘ | ∘ | ∘ | ∘ | ∘ | ∘ |
| 4.0 | 45 °C | × | × | × | × | × | × | × |
| 7.0 | 45 °C | × | × | × | × | × | × | × |
| 9.0 | 45 °C | × | × | × | × | × | × | × |

| | | | | | | | | |
|---|---|---|---|---|---|---|---|---|
| ×: liquid ∘: solid | | | | | | | | |

### Example 4 Influence of temperature on the state of matter of Py-C12 (free base) at different concentrations in water

5-*N*-carboxamido-2-pyrrolidone-*N*'-n-dodecyl propane-1,3-diamine (Py-C12) free base at concentrations of 1 % (w/v), 2.5 % (w/v), 5 % (w/v), 10 % (w/v), 20 % (w/v), 30 % (w/v), 40 % (w/v) were incubated at temperatures between 36 °C and 50 °C (see table 4).

**Table_4: Influence of temperature on the state of matter of Py-C12 free base at different concentration in water**

| Temperature | 36 °C | 38 °C | 40 °C | 42 °C | 44 °C | 46 °C | 48 °C | 50 °C |
|---|---|---|---|---|---|---|---|---|
| 1 % (w/v) Py-C12 free base | ∘ | ∘ | × | × | × | × | × | × |
| 2.5 % (w/v) Py-C12 free base | ∘ | ∘ | × | × | × | × | × | × |
| 5 % (w/v) Py-C12 free base | ∘ | ∘ | × | × | × | × | × | × |
| 10 % (w/v) Py-C12 free base | ∘ | ∘ | × | × | × | × | × | × |
| 20 % (w/v) Py-C12 free base | ∘ | ∘ | ∘ | ∘ | × | × | × | × |
| 30 % (w/v) Py-C12 free base | ∘ | ∘ | ∘ | ∘ | × | × | × | × |
| 40 % (w/v) Py-C12 free base | ∘ | ∘ | ∘ | ∘ | × | × | × | × |

| | | | | | | | | |
|---|---|---|---|---|---|---|---|---|
| X: liquid ∘: solid | | | | | | | | |

### Example 5 Biocidal effect of Py-C12 at pH 7.0 on bacteria and fungi.

In order to evaluate the bactericidal and fungicidal efficacy of Py-C12, *Quantitative Suspension Tests* were carried out under dirty conditions according to modified DIN EN ISO 11930:2019 with organic load using incubation periods of one and three days, respectively. For this purpose, 5-*N*-carboxamido-2-pyrrolidone-*N*'-n-dodecyl propane-1,3-diamine (Py-C12) solutions were adjusted to pH 7.0 with HCl and subsequently diluted to corresponding test concentrations. Table 5 shows the respective *Germ reduction Factor (log₁₀)* for each microorganism with the corresponding Py-C12 concentration and incubation period.

**Table 5: Biocidal effect of Py-C12 at pH 7.0. Quantitative Suspension Test for the evaluation of bactericidal and fungicidal activity according to modified DIN EN ISO 11930:2019 with organic load using incubation periods of one and three days, respectively.**

| **Microorganism** | **Concentration of Py-C12** | **Germ reduction factor log₁₀** | **Incubation period** |
|---|---|---|---|
| *Staphylococcus aureus* | 0.01 % (w/v) | ≥ 5.6 | 1 day |
| *Escherichia coli* | 0.025 % (w/v) | ≥ 5.5 | 1 day |
| *Pseudomonas aeruginosa* | 0.025 % (w/v) | ≥ 5.6 | 1 day |
| *Candida albicans* | 0.025 % (w/v) | 4.2 | 1 day |
| *Aspergillus brasiliensis* | 0.5 % (w/v) | 4.6 | 3 days |

### Example 6 Textiles treated with 5-N-carboxamido-2-pyrrolidone-N'-n-dodecyl propane-1,3-diamine

(Py-C12) exhibit high wash resistance in aqueous systems and retain their biocidal activity.

Round sterile cotton textile samples were treated with a liquid Py-C12 solution (1 % (w/v) in water; pH 7.0) followed by intensive washing steps. For controls, samples were treated with water instead of Py-C12.

For testing wash resistance in an aqueous system samples were incubated in water for 20 h at 50 °C and then washed 16 times with water at 37 °C for 5 to 10 minutes each time.

For testing wash resistance in an alcoholic/acidic system, samples were washed 8 times with 2-propanol/1 mN HCl solution and 8 times with water in total.

After all washing steps, all samples were inoculated with a β-galactosidase-expressing *E. coli* strain and then incubated for 3 days at 37 °C.

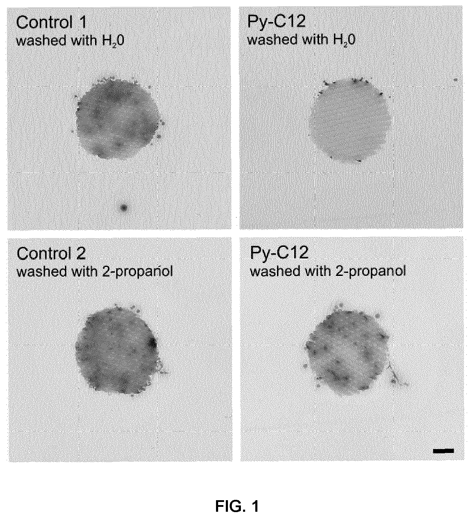

The results are shown in Fig. 1.

In an aqueous system the Py-C12 treated sample demonstrated high wash resistance and maintained its biocidal effect. This is apparent from the fact that blue colored bacterial colonies only appear at the edges of the Py-C12 treated sample (Fig. 1, top right panel), while the control (water) samples were entirely colonized with bacteria (Fig. 1, left panel).

In contrast, in an alcoholic/acidic system, i.e. when using acidic 2-propanol instead of water during the washing steps, Py-C12 was clearly removed from the cotton sample. This is apparent from the fact that the Py-C12 treated sample was completely colonized (Fig. 1, bottom right panel) similar to the control (water).

### Example 7 Modulation of the state of matter of Py-C12 due to pH shift using HCl and NaOH

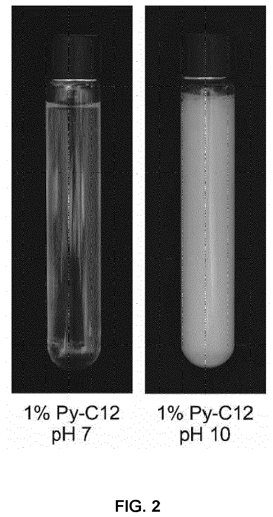

1 % (w/v) 5-*N*-carboxamido-2-pyrrolidone-*N*'-n-dodecyl propane-1,3-diamine (Py-C12) free base adjusted with HCl to a pH of 7 was completely soluble in water at room temperature (see Fig. 2, left panel). After addition of NaOH to increase the pH above 9.0, Py-C12 started to precipitate in a time dependent manner (see Fig. 2, right panel: white color indicates precipitation).

### Example 8 Modulation of the state of matter of Py-C12 due to pH shift using CO₂

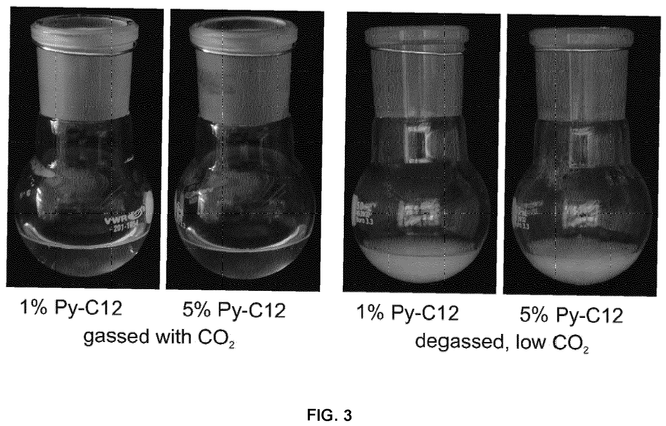

1 % (w/v) and 5 % (w/v) 5-*N*-carboxamido-2-pyrrolidone-*N*'-n-dodecyl propane-1,3-diamine (Py-C12) free base solutions in water were gassed with carbon dioxide to reduce the pH from 9.5 to 7. Under these pH conditions, Py-C12 was completely soluble at room temperature (see Fig. 3, left panel). After degassing of the CO₂-gassed solutions, Py-C12 precipitates due to the increasing pH in a time dependent manner (see Fig. 3, right panel).

### Example 9 Modulation of the state of matter of Py-C12 due to salt concentration

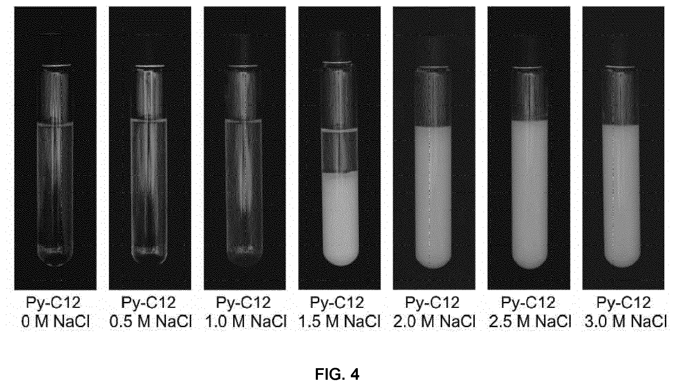

2 % (w/v) 5-*N*-carboxamido-2-pyrrolidone-*N*'-n-dodecyl propane-1,3-diamine (Py-C12) was adjusted with HCl to pH 7 and combined with different concentrations of NaCl ranging from 0.5 M to 3 M in water at room temperature. A clearly visible precipitate (white color) is observed at concentrations of 1.5 M or more (see Fig. 4).

### Example 10 Modulation of the state of matter of Py-C12 due to temperature shift

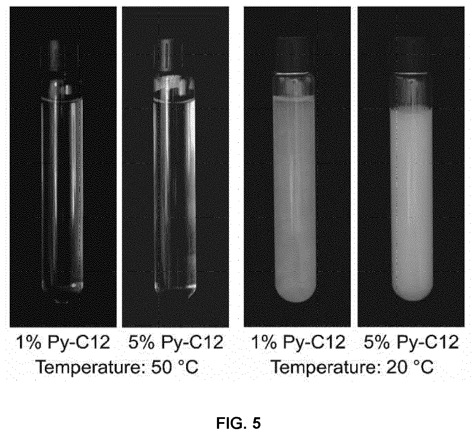

1 % (w/v) and 5 % (w/v) 5-*N*-carboxamido-2-pyrrolidone-*N*'-n-dodecyl propane-1,3-diamine (Py-C12) free base solutions in water were completely soluble at 50 °C (see Fig. 5, left panel), yet at room temperature readily precipitated (see white color in Fig. 5, right panel).

### Example 11 Penetration and subsequent immobilization of Py-C12 in a synthetic sponge

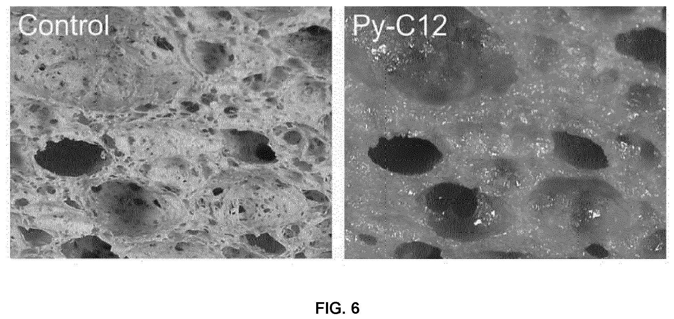

A synthetic sponge was treated with 5 % (w/v) 5-*N*-carboxamido-2-pyrrolidone-*N*'-n-dodecyl propane-1,3-diamine (Py-C12) free base solution in water. In a first step, Py-C12 was warmed to 50 °C to obtain a liquid solution. After incubation of the sponge with the Py-C12 solution, the sponge was cooled to room temperature upon which the liquid Py-C12 was converted into a solid phase and thus immobilized within the sponge. The results are depicted in Fig. 6 in which both images represent the same area and which shows small pores of the sponge filled with the solid Py-C12 (right).

### Example 12 Penetration and subsequent immobilization of Py-C12 in a perforated textile

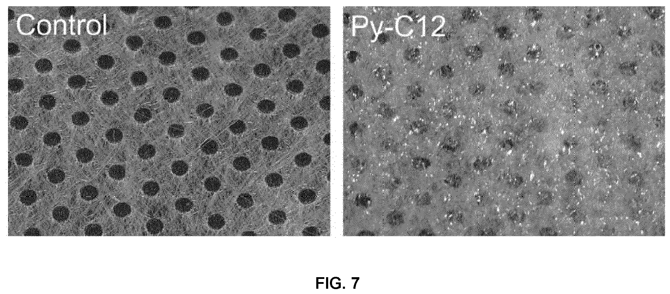

A perforated textile sheet was treated with 5 % (w/v) 5-*N*-carboxamido-2-pyrrolidone-*N*'-n-dodecyl propane-1,3-diamine (Py-C12) free base solution in water. In a first step, Py-C12 was warmed to 50 °C to obtain a liquid solution. After incubation of the textile sheet with the Py-C12 solution, the textile sheet was cooled to room temperature upon which the liquid Py-C12 was converted into a solid phase and thus immobilized within the textile sheet. The results are depicted in Fig. 7 in which both images represent the same area and which shows a waxy surface of the material due to the solid Py-C12 (right).

### Example 13 Penetration and subsequent immobilization of Py-C12 in wood

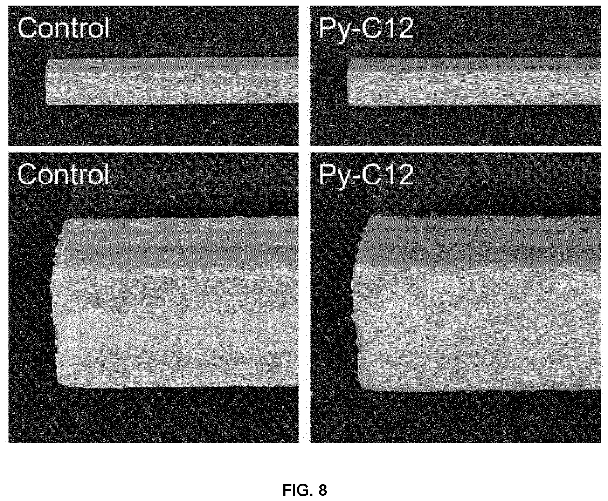

A dry pine wood sample was treated with 5 % (w/v) 5-*N*-carboxamido-2-pyrrolidone-*N*'-n-dodecyl propane-1,3-diamine (Py-C12) free base solution in water. In a first step, Py-C12 was warmed to 50 °C to obtain a liquid solution. After incubation of the wood sample with the Py-C12 solution, the wood sample was cooled to room temperature upon which the liquid Py-C12 was converted into a solid phase and thus immobilized within the wood sample. The results are depicted in Fig. 8 in which both images represent the same area and which shows a waxy surface of the wood sample due to the solid Py-C12 (right).

### Example 14 Penetration and subsequent immobilization of Py-C12 in leather.

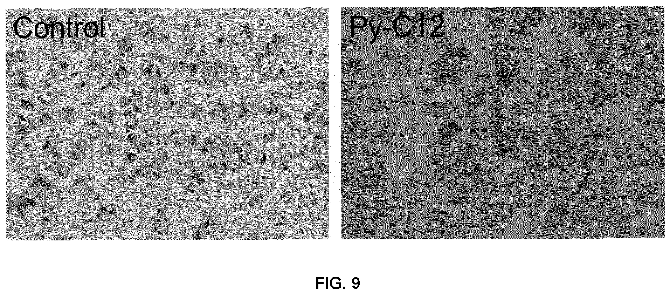

A dry leather sample was treated with 5 % (w/v) 5-*N*-carboxamido-2-pyrrolidone-*N*'-n-dodecyl propane-1,3-diamine (Py-C12) free base solution in water. In a first step, Py-C12 was warmed to 50 °C to obtain a liquid solution. After incubation of the leather sample with the Py-C12 solution, the sample was cooled to room temperature upon which the liquid Py-C12 was converted into a solid phase and thus immobilized within the leather sample. The results are depicted in Fig. 9 in which both images represent the same sample and which shows a waxy surface of the leather sample due to the solid Py-C12 (right).

### Example 15 Penetration and subsequent immobilization of Py-C12 in bone tissue.

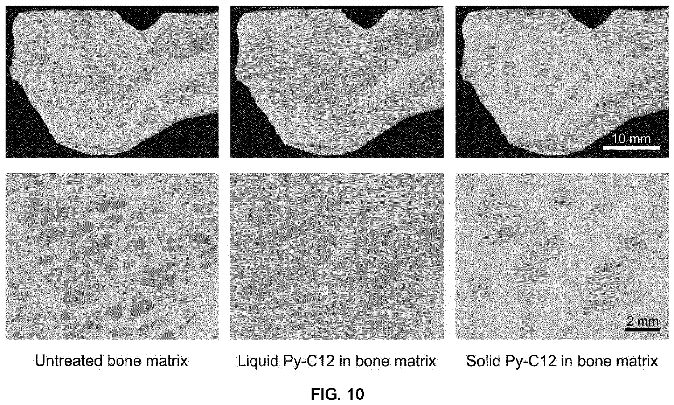

Bone tissue was treated with 5 % (w/v) 5-*N*-carboxamido-2-pyrrolidone-*N*'-n-dodecyl propane-1,3-diamine (Py-C12) free base solution in water. In a first step, Py-C12 was warmed to 50 °C to obtain a liquid solution. After incubation of the bone tissue with the Py-C12 solution, the sample was cooled to room temperature upon which the liquid Py-C12 was converted into a solid phase and thus immobilized within the osteogenic tissue. The results are depicted in Fig. 10 in which all images represent the same sample. Left: untreated bone matrix; middle: sample with pre-warmed liquid Py-C12; right: immobilized solid Py-C12 within the bone tissue. Lower panel represents magnified views of the upper panel.

### Example 16 Polyester fabric treated with Py-C12 exhibit high wash resistance in aqueous systems and retain their biocidal activity.

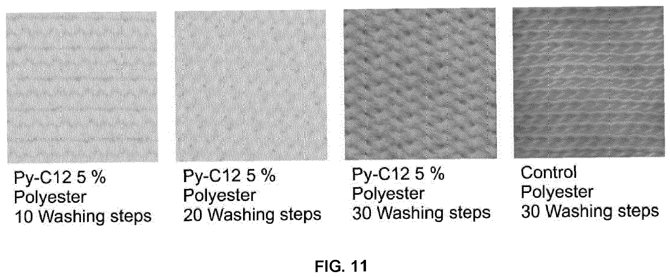

Polyester fabrics treated with 5-*N*-carboxamido-2-pyrrolidone-*N*'-n-dodecyl propane-1 ,3-diamine (Py-C12) free base exhibit high wash resistance in aqueous systems and retain their biocidal activity even after 20 washing steps. In a first step, 5 % (w/v) Py-C12 free base in water was warmed to 50 °C to obtain a liquid solution. After incubation with the Py-C12 solution, the samples were cooled to room temperature upon which the liquid Py-C12 was converted into a solid phase and thus immobilized to the material. After drying, samples were washed with water at room temperature 10, 20, and 30 times for 15 minutes each time. Thereafter, all samples were inoculated with a β-galactosidase-expressing *E*. *coli* strain and then incubated for 3 days at 37 °C. Blue coloured bacteria only appear in control and in the Py-C12 treated sample that was washed 30 times with water (see Fig. 11). The unstained groups (10 and 20 washing steps) demonstrated that polyester fabric biocidal treated with 5-*N*-carboxamido-2-pyrrolidone-*N*'-n-dodecyl propane-1,3-diamine (Py-C12) exhibits high wash resistance even after 20 washing steps

### Example 17 Silk fabric treated with Py-C12 exhibit high wash resistance in aqueous systems and retain their biocidal activity.

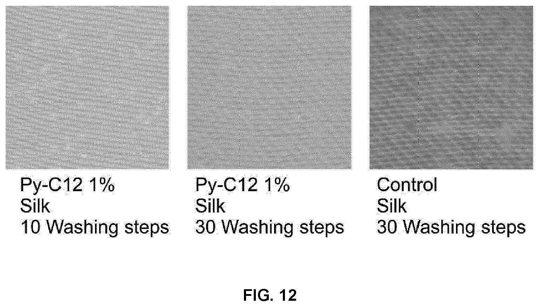

Silk fabrics treated with 5-*N*-carboxamido-2-pyrrolidone-*N*'-n-dodecyl propane-1,3-diamine (Py-C12) free base exhibit high wash resistance in aqueous systems and retain their biocidal activity even after 30 washing steps. In a first step, 1 % (w/v) Py-C12 free base in water was warmed to 50 °C to obtain a liquid solution. After incubation with the Py-C12 solution, the samples were cooled to room temperature upon which the liquid Py-C12 was converted into a solid phase and thus immobilized to the material. After drying, samples were washed with water at room temperature 10, 20, and 30 times for 15 minutes each time. Thereafter, all samples were inoculated with a β-galactosidase-expressing *E*. *coli* strain and then incubated for 3 days at 37 °C. Blue coloured bacteria only appear in control sample (see Fig. 12). The data demonstrated that silk fabric biocidal treated with 5-*N*-carboxamido-2-pyrrolidone-*N*'-n-dodecyl propane-1,3-diamine (Py-C12) exhibits high wash resistance even after 30 washing steps.

### Example 18 Wash resistance of immobilized Py-C12 in cotton fabric

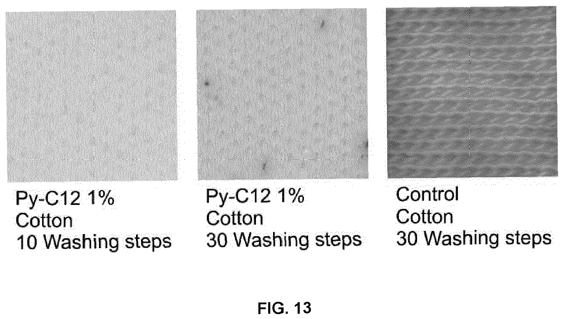

Cotton fabrics treated with 5-*N*-carboxamido-2-pyrrolidone-*N*'-n-dodecyl propane-1,3-diamine (Py-C12) free base exhibit high wash resistance in aqueous systems and retain their biocidal activity even after 30 washing steps. In a first step, 1 % (w/v) Py-C12 free base in water was warmed to 50 °C to obtain a liquid solution. After incubation with the Py-C12 solution, the samples were cooled to room temperature upon which the liquid Py-C12 was converted into a solid phase and thus immobilized to the material. After drying, samples were washed with water at room temperature 10 and 30 times for 15 minutes each time. Thereafter, all samples were inoculated with a β-galactosidase-expressing *E*. *coli* strain and then incubated for 3 days at 37 °C. Blue coloured bacteria are distributed over the whole control sample and in few spots on Py-C12 treated samples, which were washed 30 times. The cotton sample that was washed 10 times doesn't show any bacterial growth (see Fig. 13). The data demonstrated that cotton fabric biocidal treated with 5-*N*-carboxamido-2-pyrrolidone-*N*'-n-dodecyl propane-1,3-diamine (Py-C12) exhibits high wash resistance even after 30 washing steps.

### Example 19 Wood samples treated with Py-C12 exhibit high wash resistance in aqueous systems and retain their biocidal activity.

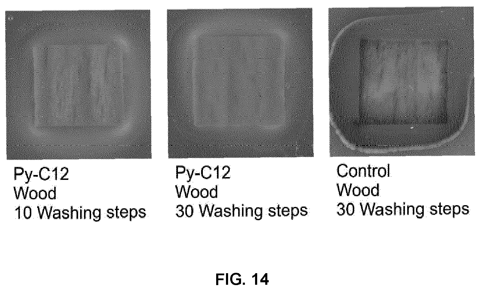

Wood samples treated with 5-*N*-carboxamido-2-pyrrolidone-*N*'-n-dodecyl propane-1,3-diamine (Py-C12) free base exhibit high wash resistance in aqueous systems and retain their biocidal activity even after 30 washing steps. In a first step, 1 % (w/v) Py-C12 free base in water) was warmed to 50 °C to obtain a liquid solution. After incubation of beech wood sheets with the Py-C12 solution, the samples were cooled to room temperature upon which the liquid Py-C12 was converted into a solid phase and thus immobilized to the material. After drying, samples were washed with water at room temperature 10 and 30 times for 15 minutes each time. Thereafter, all samples were inoculated with a β-galactosidase-expressing *E. coli* strain and then incubated for 4 days at 37 °C. Blue coloured bacteria only appear on control sample (see Fig. 14). The data demonstrated that wood samples biocidal treated with 5-*N*-carboxamido-2-pyrrolidone-*N*'-n-dodecyl propane-1,3-diamine (Py-C12) exhibit high wash resistance even after 30 washing steps.

## Claims

1. Aqueous solution comprising a diamine selected from 5-*N*-carboxamido-2-pyrrolidone-*N*'-n-dodecyl propane-1,3-diamine (Py-C12) and/or 5-*N-*carboxamido-2-pyrrolidone-*N*'-n-tetradecyl propane-1,3-diamine (Py-C14), wherein the solution has
(i) a pH of 8 or less and/or
(ii) a temperature of 44 °C or more, and
wherein the solution does not comprise a solubilizer.

2. The solution of claim 1 consisting essentially of Py-C12 and water.

3. The solution of claim 1 consisting essentially of Py-C14 and water.

4. The solution of claim 1 consisting essentially of Py-C12, Py-C14 and water.

5. Use of the solution of any one of claims 1 to 4 as a biocide and/or for denaturing proteins and/or as a detergent.

6. The use of claim 5, wherein the use is at a temperature of 37 °C or less.

7. A method for attaching a diamine selected from 5-*N*-carboxamido-2-pyrrolidone-*N*'-n-dodecyl propane-1,3-diamine (Py-C12) and/or 5-*N-*carboxamido-2-pyrrolidone-*N*'-n-tetradecyl propane-1,3-diamine (Py-C14) to a material, the method comprising:
contacting the material with a liquid solution of said diamine.

8. The method of claim 7, wherein the material is porous and/or absorbent and/or adsorbent.

9. The method of claim 7 or 8, wherein the material is selected from a synthetic sponge, a fabric, leather, bone tissue or wood.

10. The method of claim 9, wherein the material is a fabric and the fabric comprises cellulose, silk and/or a polyester.

11. The method of claim 10, wherein the fabric is cotton.

12. The method of any one of claims 7 to 11, the method further comprising, after the contacting:
solidifying said diamine.

13. The method of claim 12, wherein the solidifying comprises one or more of the following:
(i) cooling the material;
(ii) increasing the pH of the material;
(iii) increasing the salt concentration of the material.

14. The method of claim 12 or 13, the method further comprising, after the solidifying:
liquefying said diamine.

15. The method of claim 14, wherein the liquefying comprises one or more of the following:
(i) heating the material;
(ii) decreasing the pH of the material;
(iii) decreasing the salt concentration of the material,
(iv) adding a solvent.
